# EUROPÄISCHE PATENTSCHRIFT

(11) **EP 1 205 425 B1**
(45) Veröffentlichungstag und Bekanntmachung des Hinweises auf die Patenterteilung: **21.06.2006**
(21) Anmeldenummer: 01125215.2
(22) Anmeldetag: 24.10.2001
(51) Int. Cl.: B66F 9/075, B60K 7/00

(54) **Flurförderzeug mit einer Einzelradaufhängung**
Industrial truck with an independent wheel suspension
Chariot de manutention avec une suspension à roue indépendante

(30) Priorität: 10.11.2000 DE 10055751
(43) Veröffentlichungstag der Anmeldung: 15.05.2002
(73) Patentinhaber: STILL GMBH, D-22113 Hamburg (DE)
(72) Erfinder: Bavendiek, Rainer, Dr.-Ing., 21465 Wentorf (DE); Biermann, Thorsten, Dipl.-Ing., 22043 Hamburg (DE); Bruns, Rainer, Prof.Dr.-Ing., 22395 Hamburg (DE)
(74) Vertreter: Lang, Michael

(56) Entgegenhaltungen:
- DE-A- 19 524 524
- DE-B- 1 913 526
- DE-U- 1 790 386
- FR-A- 1 066 297
- FR-A- 2 504 905
- GB-A- 2 261 411

## Beschreibung

Die Erfindung betrifft einen Gegengewichts-Gabelstapler mit zwei frontseitig angeordneten Antriebsrädern, von denen jedes an einem Längslenker befestigt ist, der an einem Fahrzeugrahmen federnd aufgehängt ist, wobei die Längslenker unabhängig voneinander um eine quer zur Fahrzeuglängsachse angeordnete Drehachse schwenkbar gelagert sind.

Mit dem Begriff "federnd aufgehängt" soll nicht ausgeschlossen werden, dass durch Blockieren der Federung in bestimmten Betriebszuständen eine starre Aufhängung erzielbar ist.

Gegengewichts-Gabelstapler, weisen ein Fahrwerk auf, das aus einer starr mit dem Fahrzeugrahmen verbundenen vorderen Antriebsachse und einer pendelnd am Fahrzeugrahmen aufgehängten hinteren Lenkachse besteht. Dadurch wird ein Stützdreieck gebildet, mit dessen Hilfe das Fahrwerk auf der in vielen Fällen unebenen Fahrbahn statisch bestimmt abgestützt ist. Solche Flu rförderzeuge weisen eine gute Standfestigkeit auf. Allerdings werden beim Fahren Schwingungen und Stöße, die aus Fahrbahnunebenheiten resultieren, ungedämpft in das Fahrzeug eingeleitet, wodurch die Umschlagsleistung, die Fahrsicherheit und der Fahrkomfort vermindert werden. Es ist daher auch bekannt, gefederte Fahrwerke einzusetzen.

Ein gattungsgemäßes Flurförderzeug mit gefederter Vorderachse ist in der Druckschrift FR 2 504 905 offenbart. Die Antriebsräder, die sich unabhängig voneinander relativ zum Fahrzeugrahmen bewegen können, verfügen dabei jeweils über einen eigenen Antriebsmotor (Radnabenmotor).

In der DE 1 790 386 ist eine Hinterachsaufhängung eines Seitenstaplers gezeigt, bei welcher der Antriebsmotor zwischen zwei Längslenkern angeordnet ist und über ein Getriebe mit den Antriebsrädern in Wirkverbindung steht.

Der vorliegenden Erfindung liegt die Aufgabe zu Grunde, einen Gegengewichts-Gabelstapler der eingangs genannten Art zur Verfügung zu stellen, der kompakte Abmessungen aufweist und mit einfachen Mitteln die Verwendung eines für beide Antriebsräder gemeinsamen Antriebsmotors ermöglicht.

Diese Aufgabe wird erfindungsgemäß dadurch gelöst, dass zwischen den Längslenkern ein Antriebsmotor mit einem nachgeschalteten Getriebe angeordnet ist, das ausgangsseitig mit den beiden Rädern in Wirkverbindung steht, wobei ein mit dem Fahrzeugrahmen fest verbundener, frontseitiger Zusatzrahmen zur Befestigung des Antriebsmotors und des Getriebes vorgesehen ist, der zwei seitlich voneinander beabstandete Längsträger aufweist, die frontseitig durch einen Querträger verbunden sind und zwischen denen sich der Antriebsmotor und das Getriebe befinden, wobei beiderseits des Zusatzrahmens die Längslenker angeordnet sind und an dem Querträger ein Hubgerüst befestigt ist.

Der erfindungswesentliche Gedanke besteht demnach darin, den Raum zwischen den Längslenkern, der beim eingangs beschriebenen Flurförderzeug des Standes der Technik für eine federnde Aufhängung des Hubgerüstes benötigt wird, zur Unterbringung eines Antriebsmotors mit nachgeschaltetem Getriebe zur Verteilung des Antriebsmoments auf die beiden Antriebsräder zu nutzen. Eine derartige Konstruktion ist einfach aufgebaut und erfordert nur einen geringen Platzbedarf.

Gemäß einer vorteilhaften Ausgestaltung der Erfindung ist das Getriebe im Bereich der Drehachse der Längslenker angeordnet und sind im Bereich jedes Längslenkers Mittel zur Übertragung eines Drehmoments vom Ausgang des Getriebes zum zugeordneten Antriebsrad vorgesehen. Diese Anordnung erlaubt es, den Aufwand zur Koppelung des Getriebes mit den Antriebsrädern und damit den Aufwand zur Verteilung des Antriebsmoments zu minimieren.

Sofern die Längslenker jeweils an einem der Längsträger des Zusatzrahmens befestigt sind, ergibt sich eine Konstruktion, bei der sowohl der Antrieb als auch die Radaufhängung zu einer Baueinheit zusammengefasst sind. Dabei wird einerseits der Platzbedarf minimiert, andererseits ergeben sich Vorteile bei der Montage des Flurförderzeugs (Vormontage der Baueinheit, modularisierte Endmontage des Flurförderzeugs).

Die Längslenker sind mit Vorteil als Hohlprofile, insbesondere als Kastenprofile ausgebildet. Hohlprofile können große Kräfte und Momente aufnehmen. Darüber hinaus ist es möglich, die Mittel zur Übertragung eines Drehmoments zwischen dem Ausgang des Getriebes und den Antriebsrädern geschützt und platzsparend innerhalb der Längslenker unterzubringen.

Eine Weiterbildung der Erfindung sieht vor, dass das Getriebe als Differentialgetriebe, insbesondere als Kegelrad-Differentialgetriebe ausgebildet ist, das zwei Ausgangswellen aufweist, die parallel oder koaxial zur Drehachse angeordnet sind, um die die Längslenker schwenkbar sind.

Zweckmäßigerweise sind hierbei die Längslenker jeweils mit einem Schwenklager versehen, das koaxial zu einer Ausgangswelle des Getriebes oder einer davon angetriebenen Parallelwelle angeordnet ist.

Gemäß einer ersten Ausgestaltung weist der Antriebsmotor eine rechtwinklig zu den Ausgangswellen des Getriebes angeordnete, mit dem Eingang des Getriebes in Wirkverbindung stehende Motorwelle auf.

Gemäß einer zweiten Ausgestaltung weist der Antriebsmotor eine als Hohlwelle ausgebildete, mit dem Eingang des Getriebes in Wirkverbindung stehende Motorwelle auf, die koaxial zu den Ausgangswellen des Getriebes angeordnet ist und durch die sich eine der Ausgangswellen hindurch erstreckt.

Der Antriebsmotor kann als Elektromotor ausgebildet sein. Es ist prinzipiell aber auch möglich, andere Antriebsmotoren vorzusehen, z. B. einen Verbrennungsmotor.

Zur Übertragung der auf die Längslenker in vertikaler Richtung einwirkenden Kräfte in den Fahrzeugrahmen erweist es sich als günstig, wenn am radseitigen Ende jedes Längslenkers ein Feder-Dämpfer-Element angelenkt ist, das mit dem Fahrzeugrahmen und/oder mit dem Zusatzrahmen und/oder mit einem am Fahrzeugrahmen und/oder am Zusatzrahmen befestigten Stützrahmen verbunden ist.

Sofern das Feder-Dämpfer-Element blockierbar, insbesondere hydraulisch blockierbar ist, kann unter bestimmten Betriebsbedingungen die Standsicherheit des erfindungsgemäßen Flurförderzeugs erhöht werden, indem die Feder-Dämpfer-Funktion abgeschaltet wird und somit die Längslenker in einer bestimmten Stellung fixiert sind.

Gemäß einer zweckmäßigen Ausgestaltung kann das Feder-Dämpfer-Element längenverstellbar, insbesondere hydraulisch längenverstellbar sein. Dadurch kann das Fahrzeugniveau geregelt werden.

Günstig ist es femer, wenn die Federsteifigkeit und/oder die Dämpfungskonstante des Feder-Dämpfer-Elements einstellbar ist. Durch Änderung dieser beiden Parameter kann das Feder-Dämpfer-Element an den jeweiligen Fahr- und Beladungszustand des Flurförderzeugs angepasst werden.

Weitere Vorteile und Einzelheiten der Erfindung werden anhand der in den schematischen Figuren dargestellten Ausführungsbeispiele näher erläutert. Dabei zeigt
- Figur 1: eine perspektivische Ansicht des frontseitigen Rahmenabschnitts eines erfindungsgemäßen Gegengewichts-Gabelstaplers,
- Figur 2: eine perspektivische Ansicht des frontseitigen Rahmenabschnitts einer Variante des erfindungsgemäßen Gegengewichts-Gabelstaplers,
- Figur 3: ein Prinzipschema zur Anordnung des Abtriebsmotors und des Getriebes in einem Gegengewichts-Gabelstapler gemäß Figur 1 und
- Figur 4: ein Prinzipschema zur Anordnung des Antriebsmotors und des Getriebes in einem Gegengewichts-Gabelstapler gemäß Figur 2.

Der Gegengewichts-Gabelstapler weist einen Fahrzeugrahmen 1 und zwei frontseitige Antriebsräder 2 auf, von denen in den Figuren nur eines dargestellt ist.

Am vorderen Ende des Fahrzeugrahmens 1 ist an einer quer zur Fahrzeuglängsachse angeordneten Aufnahme 1a ein Zusatzrahmen 3 befestigt, der aus zwei in Fahrzeugquerrichtung voneinander beabstandeten Längsträgem 3a und 3b besteht, die an den Enden, die dem Fahrzeugrahmen 1 fern sind, durch einen Querträger 3c miteinander verbunden sind. Am Querträger 3c ist ein in den Figuren nicht dargestelltes Hubgerüst befestigt.

Jeder Längsträger 3a bzw. 3b ist auf der fahrzeugäußeren Seite im Bereich, der dem Fahrzeugrahmen 1 benachbart ist, mit einem Schwenklager 4 versehen, auf dem ein parallel zum Längsträger 3a bzw. 3b angeordneter Längslenker 5 bzw. 6 um eine quer angeordnete Drehachse schwenkbar ist. Die bevorzugt als kastenförmige Hohlprofile ausgeführte Längslenker 5 und 6 sind jeweils am vorderen Ende mit einem Nabenträger 7 und einer darauf gelagerten, angetriebenen Nabe 8 versehen. Auf jeder Nabe 8 ist ein Antriebsrad 2 befestigt.

Zur Aufnahme von auf die Längslenker 5 und 6 bzw. die Antriebsräder 2 einwirkenden Vertikalkräften ist jeder Längslenker 5 bzw. 6 mittels eines Feder-Dämpfer-Elements 9 bzw. 10 an einem Stützrahmen 11 bzw. 12 abgestützt, der im vorliegenden Ausführungsbeispiel an der Aufnahme 1a des Fahrzeugrahmens 1 befestigt ist. Selbstverständlich ist es auch möglich, die Stützrahmen 11, 12 zusätzlich oder alternativ am Zusatzrahmen 3 zu befestigen.

Der Zusatzrahmen 3 dient nicht nur der Befestigung der unabhängig voneinander schwenkbaren Längslenker 5 und 6, sondern auch der Unterbringung eines Antriebsmotors 13 und eines Getriebes 14, die beide zwischen den Längsträgern 3a und 3b angeordnet und am Zusatzrahmen 3 und/oder dem Fahrzeugrahmen 1 (an der Aufnahme 1 a) befestigt sind.

Das Getriebe 14 ist bevorzugt als Differentialgetriebe in Kegelradbauweise ausgebildet. Gegebenenfalls kann auch ein Untersetzungsgetriebe integriert sein.

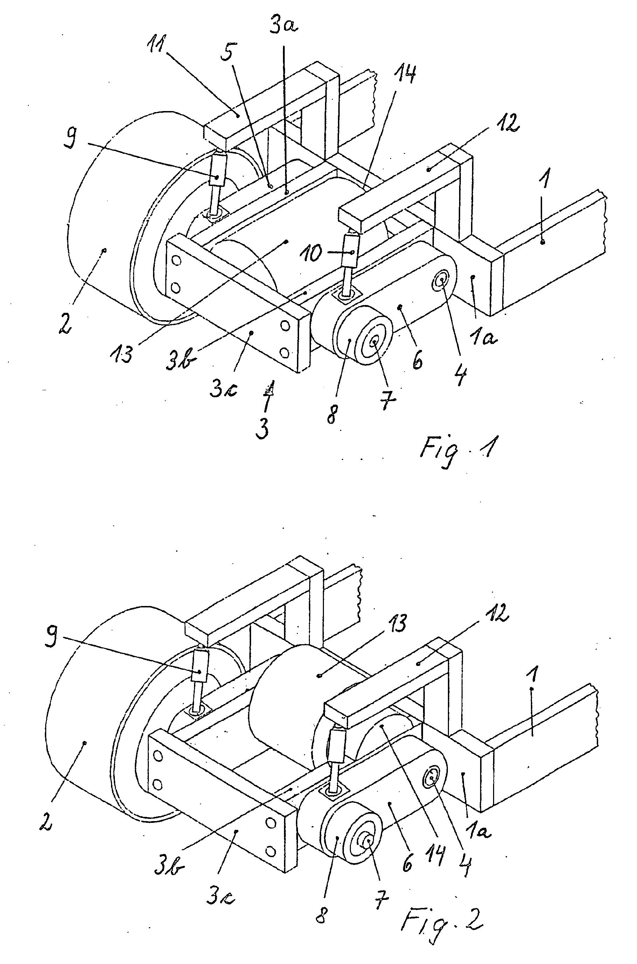

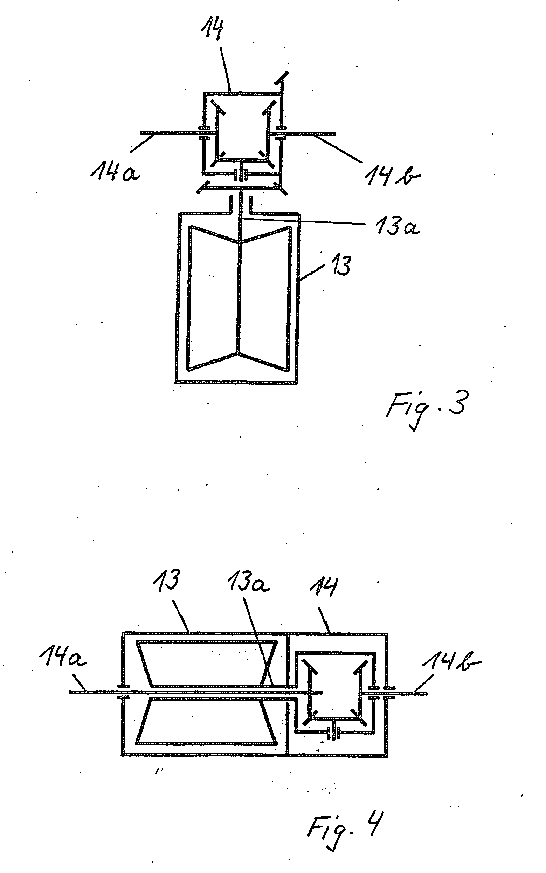

Zwei Möglichkeiten der Anordnung des Antriebsmotors 13 und des Getriebes 14 werden bevorzugt: In den Figuren 1 und 3 ist eine Variante mit in Fahrzeuglängsrichtung angeordnetem Antriebsmotor 13 dargestellt. Die Figuren 2 und 4 zeigen eine Anordnung mit quer zur Fahrzeuglängsrichtung angeordnetem Antriebsmotor 13.

In beiden Fällen sind zwei Ausgangswellen 14a und 14b des Getriebes 14 koaxial zur Schwenkachse 4 angeordnet, um die die Längslenker 5 und 6 schwenkbar sind. Dabei sind zweckmäßigerweise die Ausgangswellen 14a und 14b in die Hohlprofile der Längslenker 5 und 6 hinein- und/oder hindurchdurchgeführt.

Es ist auch eine Konstruktion möglich, bei der - im Falle eines Achsversatzes zwischen den Ausgangswellen 14a, 14b des Getriebes 14 und dem Schwenklager 4 - die Ausgangswellen 14a und 14b zunächst Parallelwellen antreiben, die ihrerseits in die Hohlprofile der Längslenker 5 und 6 hinein- und/oder hindurchgeführt sind.

Im bevorzugten Anwendungsfall ragen die Ausgangswellen 14a und 14b in das Hohlprofil der Längslenker 5 und 6 hinein und treiben beispielsweise unter Zwischenschaltung von Stirnradverzahnungsstufen, Umschlingungsgetrieben, Königswellenantrieben etc. die Naben 8, wobei die genannten Übertragungsmittel innerhalb der Längslenker 5 und 6 (geschützt) untergebracht sind.

In der zweiten Variante ist eine der Ausgangswellen 14a oder 14b, beispielsweise die in Figur 4 linke Ausgangswelle 14a durch die als Hohlwelle ausgebildete Motorwelle 13a des Antriebsmotors 13 hindurchgeführt. Dabei ist der Antriebsmotor 13 koaxial zur Drehachse angeordnet, um die die Längslenker 5 und 6 schwenkbar gelagert sind. Bevorzugt wird dabei eine Anordnung, bei der sowohl die Motorwelle 13a und die Ausgangswellen 14a und 14b des Getriebes 10 als auch die Schwenklager 4 der Längslenker 5 und 6 koaxial zueinander angeordnet sind. Die Motorwelle 13a ist zweckmäßigerweise direkt mit dem Korb des Differentialgetriebes gekoppelt.

## Patentansprüche

1. Gegengewichts-Gabelstapler mit zwei frontseitig angeordneten Antriebsrädern, von denen jedes an einem Längslenker befestigt ist, der an einem Fahrzeugrahmen federnd aufgehängt ist, wobei die Längslenker unabhängig voneinander um eine quer zur Fahrzeuglängsachse angeordnete Drehachse schwenkbar gelagert sind, **dadurch gekennzeichnet, dass** zwischen den Längslenkern (5, 6) ein Antriebsmotor (13) mit einem nachgeschalteten Getriebe (14) angeordnet ist, das ausgangsseitig mit den beiden Rädern (2) in Wirkverbindung steht, wobei ein mit dem Fahrzeugrahmen (1, 1a) fest verbundener, frontseitiger Zusatzrahmen (3) zur Befestigung des Antriebsmotors (13) und des Getriebes (14) vorgesehen ist, der zwei seitlich voneinander beabstandete Längsträger (3a, 3b) aufweist, die frontseitig durch einen Querträger (3c) verbunden sind und zwischen denen sich der Antriebsmotor (13) und das Getriebe (14) befinden, wobei beiderseits des Zusatzrahmens (3) die Längslenker (5, 6) angeordnet sind und an dem Querträger (3c) ein Hubgerüst befestigt ist.

2. Gegengewichts-Gabelstapler Anspruch 1, **dadurch gekennzeichnet, dass** das Getriebe (14) im Bereich der Drehachse der Längslenker (4) angeordnet ist und im Bereich jedes Längslenkers (5, 6) Mittel zur Übertragung eines Drehmoments vom Ausgang des Getriebes (14) zum zugeordneten Antriebsrad (2) vorgesehen sind.

3. Gegengewichts-Gabelstapler nach Anspruch 1 oder 2, **dadurch gekennzeichnet, dass** die Längslenker (5, 6) jeweils an einem der Längsträger (3a; 3b) des Zusatzrahmens (3) befestigt sind.

4. Gegengewichts-Gabelstapler nach einem der Ansprüche 1 bis 3, **dadurch gekennzeichnet, dass** die Längslenker (5, 6) als Hohlprofile, insbesondere als Kastenprofile ausgebildet sind.

5. Gegengewichts-Gabelstapler nach Anspruch 4, **dadurch gekennzeichnet, dass** innerhalb der Längslenker (5, 6) Mittel zur Übertragung eines Drehmoments vom Ausgang des Getriebes (14) zum zugeordneten Antriebsrad (2) angeordnet sind.

6. Gegengewichts-Gabelstapler nach einem der Ansprüche 1 bis 5, **dadurch gekennzeichnet, dass** das Getriebe (14) als Differentialgetriebe, insbesondere als Kegelrad-Differentialgetriebe ausgebildet ist, das zwei Ausgangswellen (14a, 14b) aufweist, die parallel oder koaxial zur Drehachse angeordnet sind, um die die Längslenker (5, 6) schwenkbar sind.

7. Gegengewichts-Gabelstapler nach Anspruch 6, **dadurch gekennzeichnet, dass** die Längslenker (5, 6) jeweils mit einem Schwenklager (4) versehen sind, das koaxial zu einer Ausgangswelle (14a; 14b) des Getriebes (14) oder einer davon angetriebenen Parallelwelle angeordnet ist.

8. Gegengewichts-Gabelstapler Anspruch 6 oder 7, **dadurch gekennzeichnet, dass** der Antriebsmotor (13) eine rechtwinklig zu den Ausgangswellen (14a, 14b) des Getriebes (14) angeordnete, mit dem Eingang des Getriebes (14) in Wirkverbindung stehende Motorwelle (13a) aufweist.

9. Gegengewichts-Gabelstapter Anspruch 6 oder 7, **dadurch gekennzeichnet, dass** der Antriebsmotor (13) eine als Hohlwelle ausgebildete, mit dem Eingang des Getriebes (14) in Wirkverbindung stehende Motorwelle (13a) aufweist, die koaxial zu den Ausgangswellen (14a, 14b) des Getriebes (14) angeordnet ist und durch die sich eine der Ausgangswellen (14a, 14b) hindurch erstreckt.

## Claims

1. Counterweight fork-lift truck having two drive wheels arranged at the front, each of which is fixed to a trailing arm, which is suspended in a sprung manner on a vehicle frame, the trailing arms being mounted independently of one another such that they can pivot about an axis of rotation arranged transversely with respect to the longitudinal axis of the vehicle, **characterized in that** a drive motor (13) having a downstream transmission (14), which is operatively connected on the output side to the two wheels (2), is arranged between the trailing arms (5, 6), a front-side additional frame (3), which is fixedly connected to the vehicle frame (1, 1a), being provided for the purpose of fixing the drive motor (13) and the transmission (19) and having two longitudinal supports (3a, 3b), which are spaced apart laterally from one another and are connected on the front side by means of a transverse support (3c), and between which the drive motor (13) and the transmission (14) are located, the trailing arms (5, 6) being arranged on both sides of the additional frame (3), and a mast being fixed to the transverse support (3c).

2. Counterweight fork-lift truck according to Claim 1, **characterized in that** the transmission (14) is arranged in the region of the axis of rotation of the trailing arm (4), and means for transmitting a torque from the output of the transmission (14) to the associated drive wheel (2) are provided in the region of each trailing arm (5; 6).

3. Counterweight fork-lift truck according to Claim 1 or 2, **characterized in that** the trailing arms (5, 6) are each fixed to one of the longitudinal supports (3a; 3b) of the additional frame (3).

4. Counterweight fork-lift truck according to one of Claims 1 to 3, **characterized in that** the trailing arms (5, 6) are in the form of hollow profiles, in particular in the form of box profiles.

5. Counterweight fork-lift truck according to Claim 4, **characterized in that** means for transmitting a torque from the output of the transmission (14) to the associated drive wheel (2) are arranged within the trailing arms (5,6).

6. Counterweight fork-lift truck according to one of Claims 1 to 5, **characterized in that** the transmission (14) is in the form of a differential transmission, in particular a bevel-gear differential transmission, which has two output shafts (14a, 14b), which are arranged parallel or coaxially with respect to the axis of rotation, about which the trailing arms (5, 6) can pivot.

7. Counterweight fork-lift truck according to Claim 6, **characterized in that** the trailing arms (5, 6) are each provided with a pivot bearing (4), which is arranged coaxially with respect to an output shaft (14a; 14b) of the transmission (14) or a parallel shaft driven thereby.

8. Counterweight fork-lift truck according to Claim 6 or 7, **characterized in that** the drive motor (13) has a motor shaft (13a), which is arranged at right angles to the output shafts (14a, 14b) of the transmission (14) and is operatively connected to the input of the transmission (14).

9. Counterweight fork-lift truck according to Claim 6 or 7, **characterized in that** the drive motor (13) has a motor shaft (13a), which is in the form of a hollow shaft, is operatively connected to the input of the transmission (14) and is arranged coaxially with respect to the output shafts (14a, 14b) of the transmission (14), and through which one of the output shafts (14a, 14b) extends.

## Revendications

1. Elévateur à fourche à contrepoids avec deux roues motrices disposées à l'avant, dont chacune est fixée sur un bras oscillant longitudinal, qui est suspendu élastiquement à un châssis de véhicule, dans lequel les bras oscillants longitudinaux sont montés de façon pivotante indépendamment l'un de l'autre autour d'un axe de rotation disposé transversalement à l'axe longitudinal du véhicule, **caractérisé en ce qu'**un moteur d'entraînement (13) suivi d'un engrenage (14) est disposé entre les bras oscillants longitudinaux (5, 6) et est en liaison active à sa sortie avec les deux roues (2), dans lequel il est prévu un châssis additionnel (3) disposé vers l'avant et fermement assemblé au châssis de véhicule (1, 1a) pour la fixation du moteur d'entraînement (13) et de l'engrenage (14) et qui comprend deux longerons (3a, 3b) espacés latéralement l'un de l'autre, qui sont reliés à l'avant par une traverse (3c) et entre lesquels se trouvent le moteur d'entraînement (13) et l'engrenage (14), dans lequel les bras oscillants longitudinaux (5, 6) sont disposés de part et d'autre du châssis additionnel (3) et une charpente de levage est fixée sur la traverse (3c).

2. Elévateur à fourche à contrepoids selon la revendication 1, **caractérisé en ce que** l'engrenage (14) est disposé dans la région de l'axe de rotation (4) des bras oscillants longitudinaux et il est prévu dans la région de chaque bras oscillant longitudinal (5, 6) des moyens pour transmettre un couple moteur depuis la sortie de l'engrenage (14) jusqu'à la roue motrice associée (2).

3. Elévateur à fourche à contrepoids selon la revendication 1 ou 2, **caractérisé en ce que** les bras oscillants longitudinaux (5, 6) sont chaque fois fixés à un des longerons (3a, 3b) du châssis additionnel (3).

4. Elévateur à fourche à contrepoids selon l'une quelconque des revendications 1 à 3, **caractérisé en ce que** les bras oscillants longitudinaux (5, 6) sont formés par des profilés creux, en particulier des profilés en caisson.

5. Elévateur à fourche à contrepoids selon la revendication 4, **caractérisé en ce que** des moyens sont disposés à l'intérieur des bras oscillants longitudinaux (5, 6) pour transmettre un couple moteur depuis la sortie de l'engrenage (14) jusqu'à la roue motrice associée (2).

6. Elévateur à fourche à contrepoids selon l'une quelconque des revendications 1 à 5, **caractérisé en ce que** l'engrenage (14) est formé par un engrenage différentiel, en particulier un engrenage différentiel à pignons coniques, qui présente deux arbres de sortie (14a, 14b), qui sont disposés parallèlement ou coaxialement à l'axe de rotation, autour desquels les bras oscillants longitudinaux (5, 6) peuvent pivoter.

7. Elévateur à fourche à contrepoids selon la revendication 6, **caractérisé en ce que** les bras oscillants longitudinaux (5, 6) sont chacun pourvus d'un palier pivotant (4), qui est disposé coaxialement à un arbre de sortie (14a, 14b) de l'engrenage (14) ou à un arbre parallèle entraîné par celui-ci.

8. Elévateur à fourche à contrepoids selon la revendication 6 ou 7, **caractérisé en ce que** le moteur d'entraînement (13) comprend un arbre de moteur (13a) disposé perpendiculairement aux arbres de sortie (14a, 14b) de l'engrenage (14) et se trouvant en liaison active avec l'entrée de l'engrenage (14).

9. Elévateur à fourche à contrepoids selon la revendication 6 ou 7, **caractérisé en ce que** le moteur d'entraînement (13) comporte un arbre de moteur (13a) formé par un arbre creux et se trouvant en liaison active avec l'entrée de l'engrenage (14), qui est disposé coaxialement aux arbres de sortie (14a, 14b) de l'engrenage (14) et à travers lequel s'étend un des arbres de sortie (14a, 14b).
